# EUROPEAN PATENT SPECIFICATION

(11) **EP 2 003 916 B1**
(45) Date of publication and mention of the grant of the patent: **11.02.2009**
(21) Application number: 07109189.6
(22) Date of filing: 30.05.2007
(51) Int. Cl.: H04W 4/00

(54) **Method and system for deregistering Out-Of-Coverage range devices in a wireless local area network**
Verfahren und System zur Entregistrierung von außerhalb der Reichweite befindlichen Geräten in einem drahtlosen LAN
Procédé et système pour désenregistrer des dispositifs hors de portée de couverture dans un réseau local sans fil

(43) Date of publication of application: 17.12.2008
(73) Proprietor: Research In Motion Limited, Waterloo, Ontario N2L 3W8 (CA)
(72) Inventor: Shatsky, Alexander, Waterloo Ontario N2V 2S6 (CA)
(74) Representative: Rickard, David John

(56) References cited:
- WO-A-20/06127255
- GB-A- 2 366 950
- US-A1- 2003 186 681
- US-B1- 6 643 512

## Description

This application relates generally to the field of wireless communications between wireless and other devices, and more specifically, to a method and system for deregistering out-of-coverage range devices in a wireless local area network.

Current wireless mobile communication devices include microprocessors, memory, soundcards, and run one or more software applications in addition to providing for voice communications. Examples of software applications used in these wireless devices include micro-browsers, address books, email clients, instant messaging ("IM") clients, and wavetable instruments. Additionally, wireless devices have access to a plurality of services via the Internet. A wireless device may, for example, be used to browse web sites on the Internet, to transmit and receive graphics, and to execute streaming audio and/or video applications. Such wireless devices may operate on a cellular network, on a wireless local area network ("WLAN"), or on both of these types of networks.

With respect to WLANs, the term "Wi-Fi" ("Wireless Fidelity") pertains to certain types of WLANs that use specifications in the Institute of Electrical and Electronics Engineers ("IEEE") 802.11 family. Wi-Fi has gained acceptance in many businesses, office buildings, agencies, schools, and homes as an alternative to a wired local area network ("LAN"). The 802.11 family of specifications use the Ethernet protocol and Carrier Sense Multiple Access with Collision Avoidance ("CSMA/CA") for path sharing. In addition, to improve security, entities running a WLAN often use security safeguards such as encryption or a virtual private network ("VPN").

In a WLAN, an "access point" is a device that transmits and receives data (sometimes referred to as a transceiver). An access point connects users to other users within the network and also can serve as the point of interconnection between the WLAN and a wired LAN. Each access point can serve multiple users within a defined network area. As users move beyond the range of one access point (i.e., when they roam), they are automatically handed over to the next access point. A small WLAN may only require a single access point. The number of access points required increases as a function of the number of network users and the physical size of the network.

Now, the Session Initiation Protocol ("SIP") is an Internet Engineering Task Force ("IETF") standard protocol for initiating an interactive user session that involves multimedia elements such as voice, video, chat, gaming, and virtual reality. SIP is specified in IETF Request for Comments ("RFC") 3261 "SIP: Session Initiation Protocol", June 2002, which is incorporated herein by reference. Like the hypertext transfer protocol ("HTTP") or the simple mail transfer protocol ("SMTP"), SIP works in the application layer of the Open Systems Interconnection ("OSI") communications model. The application layer is the level responsible for ensuring that communication is possible. SIP may be used in a WLAN to establish multimedia sessions or Internet telephony calls, and modify, or terminate them. The protocol can also invite participants to unicast or multicast sessions that do not necessarily involve the initiator. Because SIP supports name mapping and redirection services, it makes it possible for users to initiate and receive communications and services from any location, and for networks to identify the users wherever they are.

In more detail, SIP is a client-server protocol which deals with requests from clients (e.g., wireless devices) and responses from servers (e.g., SIP servers). Participants are identified by SIP uniform resource locators ("URLs"). Requests can be sent through any transport protocol, such as the user datagram protocol ("UDP"), the stream control transmission protocol ("SCTP"), or the transmission control protocol ("TCP"). SIP determines the end system to be used for the session, the communication media and media parameters, and the called party's desire to engage in the communication. Once these are assured, SIP establishes call parameters at either end of the communication, and handles call transfer and termination.

Registration is a common operation in SIP. Registration is one way that a server can learn the current location of a wireless device. Upon initialization, and at periodic intervals, a user's SIP wireless device sends "REGISTER" request messages to a server in the user's domain that is operating as a SIP registrar. The REGISTER messages associate the user's SIP or SIPS (i.e., secure SIP) uniform resource identifier ("URI") with the device into which the user is currently logged. The registrar writes this association, also called a binding, to a database, called the "location service", where it can be used by a proxy server in the user's domain. The proxy server receives SIP requests and forwards them on behalf of the requestor. Often, a registrar server for a domain is co-located with the proxy for that domain. In general, the distinction between types of SIP servers is logical, not physical. The location service is an abstract concept. It generally contains information that allows a proxy to input a URI and receive a set of zero or more URIs that tell the proxy where to send the request. Registrations are one way to create this information.

Thus, registration creates bindings in a location service for a particular domain that associates an "address-of-record" URI with one or more contact addresses. When a proxy for that domain receives a request whose request-URI matches the address-of-record, the proxy will forward the request to the contact addresses registered to that address-of-record. Registration thus entails sending a REGISTER request to a registrar which acts as the front end to the location service for a domain, reading and writing mappings based on the contents of REGISTER requests. This location service is then typically consulted by a proxy server that is responsible for routing requests for that domain.

REGISTER request messages add, remove, and query bindings. A REGISTER request can add a new binding between an address-of-record and one or more contact addresses. Registration on behalf of a particular address-of-record can be performed by a suitably authorized third party. A client can also remove previous bindings or query to determine which bindings are currently in place for an address-of-record.

According to SIP, the following header fields, except Contact, must be included in a REGISTER request. A Contact header field may be included: (1) "Request-URI": The Request-URI names the domain of the location service for which the registration is meant (e.g., "sip:usercity.com"). The "userinfo" and "@" components of the SIP URI must not be present. (2) "To": The To header field contains the address-of-record whose registration is to be created, queried, or modified. The To header field and the Request-URI field typically differ, as the former contains a user name. This address-of-record must be a SIP URI or SIPS URI. (3) "From": The From header field contains the address-of-record of the person responsible for the registration. The value is the same as the To header field unless the request is a third party registration. (4) "Call-ID": All registrations from a client should use the same Call-ID header field value for registrations sent to a particular registrar. If the same client were to use different Call-ID values, a registrar could not detect whether a delayed REGISTER request might have arrived out of order. (5) "CSeq": The sequence number value guarantees proper ordering of REGISTER requests. (6) "Contact": REGISTER requests may contain a Contact header field with zero or more values containing address bindings. The Contact header field may include an "expires" parameter. The "expires" parameter indicates how long a user would like the binding to be valid. The value is a number indicating seconds. If this parameter is not provided, the value of the "Expires" header field is used instead (see below).

Thus, with respect to setting the expiration interval of contact addresses in SIP, when a client sends a REGISTER request, it may suggest an expiration interval that indicates how long the client would like the registration to be valid. There are two ways in which a client can suggest an expiration interval for a binding: (1) Through an "Expires" header field; or, (2) Through an "expires" Contact header parameter. The latter allows expiration intervals to be suggested on a per-binding basis when more than one binding is given in a single REGISTER request, whereas the former suggests an expiration interval for all Contact header field values that do not contain the "expires" parameter. If neither mechanism for expressing a suggested expiration time is present in a REGISTER request, the client is indicating its desire for the server to choose.

For reference, the following is an example REGISTER request message sent from a user's wireless device to a registrar server including an Expires header field having a value of 3600 seconds for the expiration interval:
REGISTER sip:registrar.usercity.com SIP/2.0
Via: SIP/2.0/UDP user.usecity.com; branch=z9hG4bK776ads
To: User <sip:user@usercity.com>
From: User <sip:user@usercity.com>
Call-ID: 843817637684230@998sdasdh09
Contact: <sip:user@192.168.1.100>
CSeq: 1826 REGISTER
Expires: 3600

SIP deregistration procedures are not described in RFC 3261. However, the typical method used for deregistering a wireless device from a WLAN using SIP is to send a SIP REGISTER request message with the Expires header field value set to zero when the device is about to deregister from the SIP server. Once the device is deregistered, the SIP server will not route any further call requests to the device unless the device sends a new REGISTER request. This method provides for the following: (1) Reduced load on the network caused by non-relevant messages; (2) Reduced security vulnerability for users; and, (3) Immediate provision a called party's status to a calling party making the service more attractive to users.

A typical Expires header field value in a REGISTER request indicates an expiration interval of 3600 seconds. If the SIP server does not receive a "RE-REGISTER" message from the device after this interval of time, the registration will be considered expired and the device will be automatically marked as deregistered in the server. Alternatively, a server may delete the registration record from its tables. An expiration interval of 3600 seconds for the Expires header field allows for a reduction in unnecessary load on LAN networks, devices, and servers.

One problem with communications in Wi-Fi networks is that a SIP wireless device can get out of coverage range (e.g., beyond the range of an AP) before it sends the necessary deregistration message (i.e., a REGISTER request with the Expires header field value set to zero). This problem can defeat or reduce at least some of the advantages of registration described above.

A need therefore exists for an improved method and system for deregistering out-of-coverage range devices in a wireless local area network. Accordingly, a solution that addresses, at least in part, the above and other shortcomings is desired.

WO2006/127255 discloses a method of operating a multi-mode mobile station which can connect to two different networks. When it is desired to change the mobile station from a currently connected network to the other network, the mobile station sends a register message with an expiration period of zero to the currently connected network.

US-B1-6643512 discloses a method of operating a multi-mode mobile station which can connect to a private network covering a small area and a public network covering a large area. When the mobile station is connected to the private network the received signal strength is measured and compared to a threshold. If the signal strength drops below the threshold the mobile station disconnects from the private network and connects to the public network.

### BRIEF DESCRIPTION OF THE DRAWINGS

Features and advantages of the embodiments of the present application will become apparent from the following detailed description, taken in combination with the appended drawings, in which:

FIG. 1 is a block diagram illustrating a data processing system adapted for implementing an embodiment of the application;

FIG. 2 is a block diagram illustrating a wireless device and a wireless communications system adapted for implementing an embodiment of the application;

FIG. 3 is a block diagram illustrating a memory of the wireless device of FIG. 2;

FIG. 4 is a block diagram illustrating a wireless local area network ("WLAN") coupled to a wired LAN in accordance with an embodiment of the application; and,

FIG. 5 is a flow chart illustrating operations of software modules within the memory of a wireless device for deregistering the wireless device from a registration server for a wireless local area network, in accordance with an embodiment of the application.

It will be noted that throughout the appended drawings, like features are identified by like reference numerals.

### GENERAL

In the following description, details are set forth to provide an understanding of the application. In some instances, certain software, circuits, structures and techniques have not been described or shown in detail in order not to obscure the application. Embodiments of the present application may be implemented in any computer programming language provided that the operating system of the data processing system provides the facilities that may support the requirements of the application. Any limitations presented would be a result of a particular type of operating system or computer programming language and would not be a limitation of the present application.

According to one embodiment, there may be provided a method for deregistering wireless devices from a registration server for a wireless local area network, comprising: sending an initial registration request message from a wireless device to the registration server, the initial registration request message having an initial expiration interval; measuring radio signal strength at the wireless device; and, determining whether the radio signal strength has decreased to below a predetermined level and, if so, sending an updated registration request message from the wireless device to the registration server, the updated registration request message having an updated expiration interval less than the initial expiration interval and greater than zero thereby allowing timely deregistering of the wireless device by the registration server.

The method may further include determining whether the radio signal strength has increased above the predetermined level and, if so, sending the initial registration request message including the initial expiration interval from the wireless device to the registration server thereby preventing untimely deregistering of the wireless device by the registration server. The initial and updated expiration intervals may be for indicating respective time periods after which the wireless device is to be deregistered from the registration server. The initial expiration interval may be a default expiration interval and the predetermined level may be a predetermined percentage of a relative maximum radio signal strength. The predetermined level may be a plurality of predetermined levels and the initial and updated expiration intervals may relate to one or more of the plurality of predetermined levels. The initial and updated registration request messages may be REGISTER request messages in accordance with the Session Initiation Protocol ("SIP"). Each of the initial and updated registration request messages may include an address for the wireless device, a call identification, and a call sequence number. The initial and updated expiration intervals may be Expires header field values in accordance with the Session Initiation Protocol ("SIP"). The registration server may be one or more of a registrar in accordance with the Session Initiation Protocol ("SIP") and a proxy server. And, the wireless local area network may be a Wi-Fi network and the wireless device may be a Wi-Fi device.

In accordance with further aspects of the present application there may be provided apparatus such as a data processing system and a wireless device, methods for adapting these, as well as articles of manufacture such as a computer readable medium having program instructions recorded therein for practising the method of the application.

### DESCRIPTION OF PREFERRED EMBODIMENTS

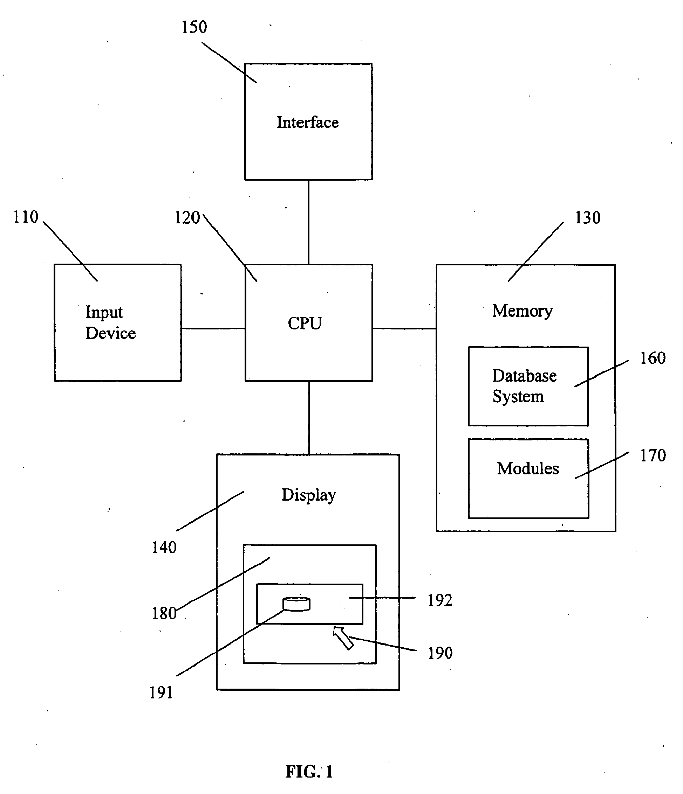

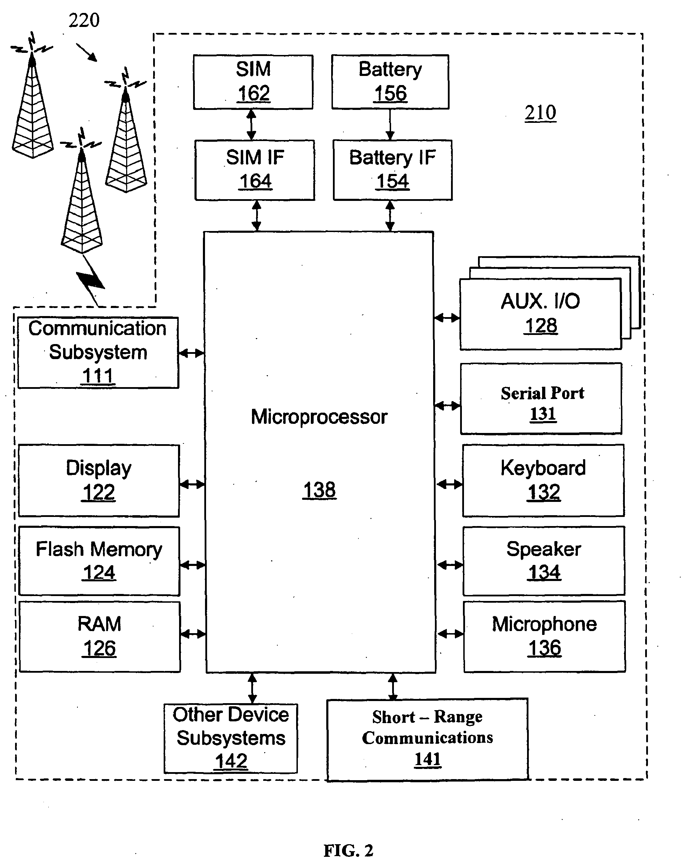

FIG. 1 is a block diagram illustrating a data processing system **100** adapted for implementing an embodiment of the application. The data processing system **100** includes an input device **110,** a central processing unit or CPU **120,** memory **130,** a display **140,** and an interface **150.** The input device **110** may include a keyboard, mouse, trackball, remote control, or similar device. The CPU **120** may include dedicated coprocessors and memory devices. The memory **130** may include RAM, ROM, or disk devices. The display **140** may include a computer screen, terminal device, or a hardcopy producing output device such as a printer or plotter. And, the interface 150 may include a network connection including an Internet connection and a wireless network **220** connection (see FIG. 2). The data processing system **100** is adapted for communicating with wireless devices **210** over a wireless network **220.**

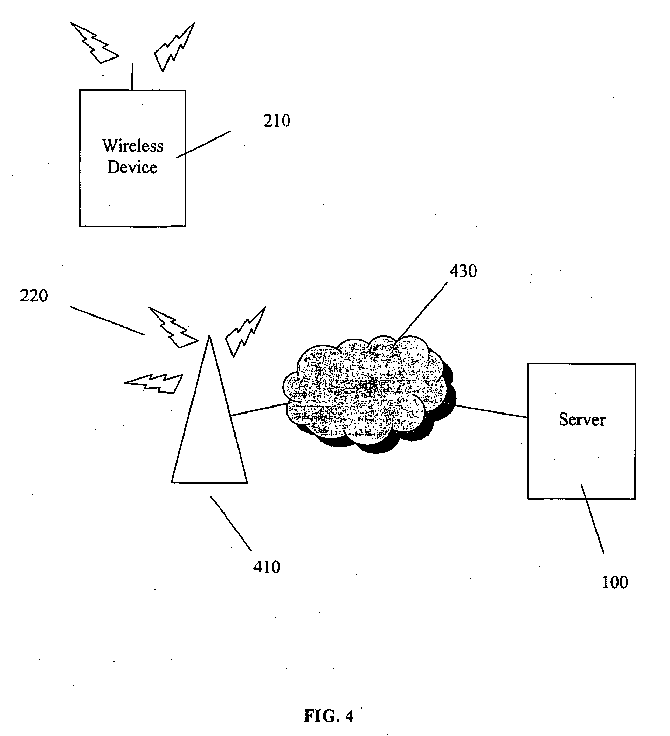

The data processing system **100** may be a server system or a personal computer ("PC") system. The CPU **120** of the system **100** is operatively coupled to memory **130** which stores an operating system (not shown), such as IBM Corporation's OS/2™, UNIX, etc., for general management of the system **100.** The interface **150** may be used for communicating to external data processing systems (e.g., access point **410** in FIG. 4) through a network (such as the Internet) or wireless network **220** (see FIG. 2).

The data processing system **100** may include a database system **160** for storing and accessing data and programming information. The database system **160** may include a database management system ("DBMS") and a database and is stored in the memory **130** of the data processing system **100.**

The data processing system **100** includes computer executable programmed instructions for directing the system **100** to implement the embodiments of the present application. The programmed instructions may be embodied in one or more hardware or software modules **170** which may be resident in the memory **130** of the data processing system **100.** Alternatively, the programmed instructions may be embodied on a computer readable medium (such as a CD disk or floppy disk) which may be used for transporting the programmed instructions to the memory **130** of the data processing system **100.** Alternatively, the programmed instructions may be embedded in a computer-readable signal or signal-bearing medium that may be uploaded to a network by a vendor or supplier of the programmed instructions, and this signal or signal-bearing medium may be downloaded through the interface **150** to the data processing system **100** from the network by end users or potential buyers.

The CPU **120** of the system **100** is typically coupled to one or more devices **110** for receiving user commands or queries and for displaying the results of these commands or queries to the user on a display **140.** As mentioned, the memory **130** may include a variety of storage devices including internal memory and external mass storage typically arranged in a hierarchy of storage as understood to those skilled in the art.

A user may interact with the data processing system **100** and its software modules **170** using a graphical user interface ("GUI") **180.** The GUI **180** may be used for monitoring, managing, and accessing the data processing system **100.** GUIs are supported by common operating systems and provide a display format which enables a user to choose commands, execute application programs, manage computer files, and perform other functions by selecting pictorial representations known as icons, or items from a menu through use of an input or pointing device such as a mouse **110.** In general, a GUI is used to convey information to and receive commands from users and generally includes a variety of GUI objects or controls, including icons, toolbars, drop-down menus, text, dialog boxes, buttons, and the like. A user typically interacts with a GUI **180** presented on a display **140** by using an input or pointing device (e.g., a mouse) **110** to position a pointer or cursor **190** over an object **191** and by "clicking" on the object **191.**

Typically, a GUI based system presents application, system status, and other information to the user in "windows" appearing on the display **140.** A window **192** is a more or less rectangular area within the display **140** in which a user may view an application or a document. Such a window **192** may be open, closed, displayed full screen, reduced to an icon, increased or reduced in size, or moved to different areas of the display **140.** Multiple windows may be displayed simultaneously, such as: windows included within other windows, windows overlapping other windows, or windows tiled within the display area.

FIG. 2 is a block diagram illustrating a wireless device **210** and a wireless network **220** adapted for implementing an embodiment of the application. The wireless network **220** may include antenna, base stations, access points, transceivers, supporting radio equipment, etc., known to those of ordinary skill in the art, for supporting wireless communications between the wireless device **210** and the data processing system **100.** The wireless network **220** may be coupled to a wireless network gateway (not shown) and to a local area network (e.g., wired LAN **430** in FIG. 4) to which the data processing system **100** may be coupled through its interface **150.**

The wireless device **210** may be a two-way communication device having at least voice and advanced data communication capabilities, including the capability to communicate with other computer systems **100.** Depending on the functionality provided by the device **210,** it may be referred to as a data messaging device, a two-way pager, a cellular telephone with data messaging capabilities, a wireless Internet appliance, a data communication device (with or without telephony capabilities), a Wi-Fi device, a WLAN device, or a dual-mode (i.e., Wi-Fi and cellular) device. The device **210** may communicate with any one of a plurality of fixed transceiver stations (e.g., **410** in FIG. 4) within its geographic coverage area.

The wireless device **210** will normally incorporate a communication subsystem **111,** which includes a RF receiver, a RF transmitter, and associated components, such as one or more (preferably embedded or internal) antenna elements, local oscillators ("LOs"), and a processing module such as a digital signal processor ("DSP") (all not shown). As will be apparent to those skilled in the field of communications, the particular design of the communication subsystem **111** depends on the communication network **220** in which the device 210 is intended to operate.

Cellular network access may be associated with a subscriber or user of the device **210** and therefore the device **210** may have a Subscriber Identity Module (or "SIM" card) **162** for inserting into a SIM interface ("IF") **164** in order to operate on the network (e.g., a global system for mobile communication ("GSM") network).

The device **210** may be a battery-powered device so it may also include a battery IF **154** for receiving one or more rechargeable batteries **156.** Such a battery **156** provides electrical power to most if not all electrical circuitry in the device **210,** and the battery IF **154** provides for a mechanical and electrical connection for it. The battery IF **154** is coupled to a regulator (not shown) which provides power to the circuitry of the device **210.**

The wireless device **210** includes a microprocessor **138** which controls overall operation of the device **210.** Communication functions, including at least data and voice communications, are performed through the communication subsystem **111.** The microprocessor **138** also interacts with additional device subsystems such as a display **122,** a flash memory **124** or other persistent store, a random access memory ("RAM") **126,** auxiliary input/output ("I/O") subsystems **128,** a serial port (e.g., a universal serial bus ("USB") port) **131,** a keyboard **132,** a clickable thumbwheel (not shown), a speaker **134,** a microphone **136,** a short-range communications subsystem **141,** and any other device subsystems generally designated at **142.** Some of the subsystems shown in FIG. 2 perform communication-related functions, whereas other subsystems may provide "resident" or on-device functions. Notably, some subsystems, such as the keyboard **132,** display **122,** and clickable thumbwheel, for example, may be used for both communication-related functions, such as entering a text message for transmission over a communication network, and device-resident functions such as a calculator or task list. Operating system software used by the microprocessor **138** is preferably stored in a persistent store such as the flash memory **124,** which may alternatively be a read-only memory ("ROM") or similar storage element (not shown). Those skilled in the art will appreciate that the operating system, specific device applications, or parts thereof, may be temporarily loaded into a volatile store such as RAM **126.**

The microprocessor **138,** in addition to its operating system functions, preferably enables execution of software applications on the device **210.** A predetermined set of applications which control basic device operations, including at least data and voice communication applications, will normally be installed on the device **210** during its manufacture. A preferred application that may be loaded onto the device **210** may be a personal information manager ("PIM") application having the ability to organize and manage data items relating to the user such as, but not limited to, instant messaging ("IM"), email, calendar events, voice mails, appointments, and task items. Naturally, one or more memory stores are available on the device **210** and SIM **162** to facilitate storage of PIM data items and other information.

The PIM application preferably has the ability to send and receive data items via the wireless network **220.** In a preferred embodiment, PIM data items are seamlessly integrated, synchronized, and updated via the wireless network, with the wireless device user's corresponding data items stored and/or associated with a host computer system such as the data processing system **100** thereby creating a mirrored host computer on the device **210** with respect to such items. This is especially advantageous where the host computer system is the wireless device user's office computer system. Additional applications may also be loaded onto the device **210** through the network **220,** the auxiliary I/O subsystem **128,** the serial port **131,** the short-range communications subsystem **141,** or any other suitable subsystem **142,** and installed by a user in RAM **126** or preferably in a non-volatile store (not shown) for execution by the microprocessor **138.** Such flexibility in application installation increases the functionality of the device **210** and may provide enhanced on-device functions, communication-related functions, or both. For example, secure communication applications may enable electronic commerce functions and other such financial transactions to be performed using the wireless device **210.**

In a data communication mode, a received signal such as a text message, an email message, or web page download will be processed by the communication subsystem **111** and input to the microprocessor **138.** The microprocessor **138** will preferably further process the signal for output to the display **122** and/or to the auxiliary I/O device **128.** A user of the wireless device **210** may also compose data items, such as email messages, for example, using the keyboard **132** in conjunction with the display **122,** the clickable thumbwheel, and possibly the auxiliary I/O device **128.** The keyboard **132** is preferably a complete alphanumeric keyboard and/or a telephone-type keypad. These composed items may be transmitted over a communication network **220** through the communication subsystem **111** or the short range communication subsystem **141.**

For voice communications, the overall operation of the wireless device **210** is substantially similar, except that the received signals would be output to the speaker **134** and signals for transmission would be generated by the microphone **136.** Alternative voice or audio I/O subsystems, such as a voice message recording subsystem, may also be implemented on the device **210.** Although voice or audio signal output is preferably accomplished primarily through the speaker **134,** the display **122** may also be used to provide, for example, an indication of the identity of a calling party, duration of a voice call, or other voice call related information.

The serial port **131** shown in FIG. 2 is normally implemented in a personal digital assistant ("PDA")-type communication device for which synchronization with a user's desktop computer is a desirable, albeit optional, component. The serial port **131** enables a user to set preferences through an external device or software application and extends the capabilities of the device **210** by providing for information or software downloads to the device **210** other than through a wireless communication network **220.** The alternate download path may, for example, be used to load an encryption key onto the device **210** through a direct and thus reliable and trusted connection to thereby provide secure device communication.

The short-range communications subsystem **141** shown in FIG. 2 is an additional optional component which provides for communication between the device **210** and different systems or devices, which need not necessarily be similar devices. For example, the subsystem **141** may include an infrared device and associated circuits and components, or a Bluetooth^{™} communication module to provide for communication with similarly-enabled systems and devices. (Bluetooth^{™} is a registered trademark of Bluetooth SIG, Inc.)

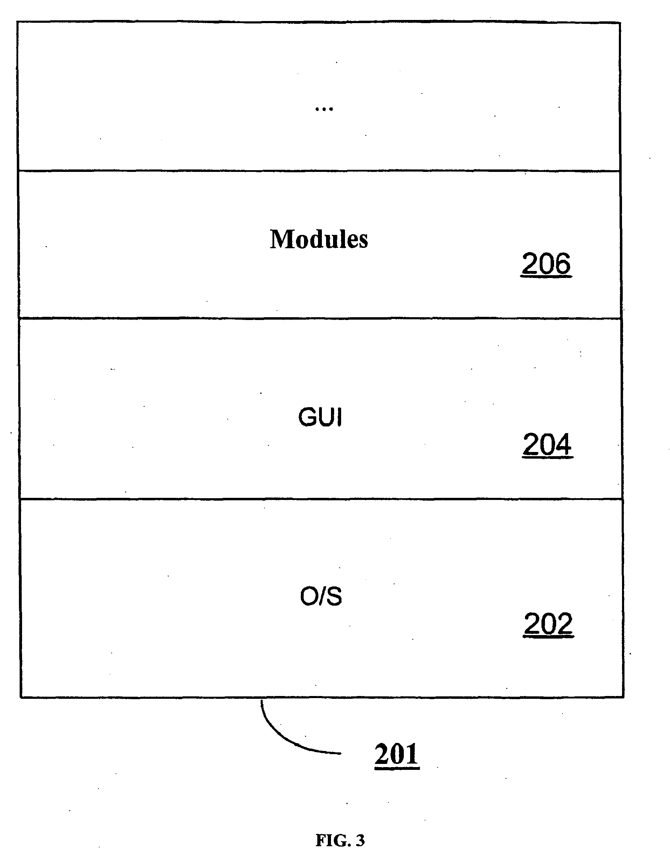

FIG. 3 is a block diagram illustrating a memory **201** of the wireless device **210** of FIG. 2. The memory **201** has various software components for controlling the device **210** and may include flash memory **124,** RAM **126,** or ROM (not shown), for example. In accordance with an embodiment of the invention, the wireless device **210** is intended to be a multi-tasking wireless communications device configured for sending and receiving data items and for making and receiving voice calls. To provide a user-friendly environment to control the operation of the device **210,** an operating system ("O/S") **202** resident on the device **210** provides a basic set of operations for supporting various applications typically operable through a graphical user interface ("GUI") **204.** For example, the O/S **202** provides basic input/output system features to obtain input from the auxiliary I/O **128,** the keyboard **132,** the clickable thumbwheel, and the like, and for facilitating output to the user. Though not shown, one or more applications for managing communications or for providing personal digital assistant like functions may also be included. In accordance with an embodiment of the application, there are provided software modules **206** for facilitating the method of the application as will be described below.

Thus, the wireless device **210** includes computer executable programmed instructions for directing the device **210** to implement the embodiments of the present application. The programmed instructions may be embodied in one or more hardware or software modules **206** which may be resident in the memory **201** of the wireless device **210.** Alternatively, the programmed instructions may be embodied on a computer readable medium (such as a CD disk or floppy disk) which may be used for transporting the programmed instructions to the memory of the wireless device **210.** Alternatively, the programmed instructions may be embedded in a computer-readable signal or signal-bearing medium that may be uploaded to a network by a vendor or supplier of the programmed instructions, and this signal or signal-bearing medium may be downloaded through an interface **111, 131, 141** to the wireless device **210** from the network by end users or potential buyers.

FIG. 4 is a block diagram illustrating a wireless local area network ("WLAN") **220** coupled to a wired LAN **430** in accordance with an embodiment of the application. One or more wireless devices **210,** each adapted for WLAN operation, communicate over the wireless network **220** to one or more WLAN access points **410.** The access point **410** is typically an IEEE 802.11 (i.e., Wi-Fi) radio receiver/transmitter (or transceiver) and functions as a bridge between the WLAN **220** and the wired LAN **430.** For security, each access point **410** may be communicatively coupled to the wired LAN **430** through a firewall and/or VPN (not shown).

On the wired LAN side of the firewall/VPN is at least one data processing system **100** configured to operate as a SIP server, SIP proxy server, and/or SIP registration server (or registrar). The SIP server **100** is a call server that negotiates a call setup on the user's behalf. For example, the server **100** provides information to indicate whether a party participating in the call is absent, busy, forwarded, or not taking calls. The SIP server **100** may be coupled to a private branch exchange ("PBX") (not shown) to which may be coupled one or more telephone handsets (not shown) and an interface to the public switched telephone network ("PSTN") (not shown). A PBX is a telephone system within an enterprise that switches calls between enterprise users on local lines while allowing all users to share a certain number of external phone lines coupled to the PSTN. Typically, the SIP server **100** is located at the enterprise customer premises, much the same as the PBX is located on site.

In general, the SIP server **100** is not tied into the cellular network directly. However, to provide cellular telephone services such as email service, etc., the wireless devices **210** may have access to email enterprise server (not shown) located on the wired LAN **430.** The email enterprise server may have a hardware configuration similar to that of the SIP server **100.** Accordingly, the wireless device **210** may be a simple Wi-Fi device or it may be a more sophisticated dual-mode device including both Wi-Fi and cellular functionality.

According to one embodiment, the wireless devices **210** may be dual-mode devices having both Wi-Fi and cellular functionality. In this embodiment, the wireless devices **210** are also able to communicate over a cellular network (not shown), such as a GSM network, linked to the wired LAN **430.**

Thus, a user of a wireless device **210** may engage in an email exchange or a telephone voice call with other wireless device users or with the user of a wired telephone handset or with a user on the PSTN, all through the WLAN **220** coupled through the access point **410** to the SIP server **100** on the wired LAN **430.**

As mentioned above, the SIP server **100** is a call server that negotiates a call setup on the user's behalf. The SIP server **100** uses SIP for the signalling used to setup a voice call. Much like an operator-assisted call, SIP provides for the messages each end exchanges to determine what device **210** is called, whether that device **210** is available, etc.

Also as mentioned above, SIP is a client-server protocol, dealing with requests from clients **210** and responses from servers **100.** Participants are identified by SIP uniform resource locators ("URLs"). Requests can be sent through any transport protocol, such as the user datagram protocol ("UDP"), the stream control transmission protocol ("SCTP"), or the transmission control protocol ("TCP"). SIP determines the end system to be used for the session, the communication media and media parameters, and the called party's desire to engage in the communication. Once these are assured, SIP establishes call parameters at either end of the communication, and handles call transfer and termination.

Also as mentioned above, SIP deregistration procedures are not described in RFC 3261. However, the typical method used for deregistering a wireless device **210** from a WLAN **220** using SIP is to send a SIP "REGISTER" request message with the "Expires" header set to zero when the device **210** is about to deregister from the SIP server **100.** Once the device **210** is deregistered, the SIP server **100** will not route any further call requests to the device **210** unless the device **210** sends a new REGISTER request.

Also as mentioned above, a typical Expires header field value in a REGISTER request indicates an expiration interval of 3600 seconds. If the SIP server **100** does not receive a "RE-REGISTER" message from the device **210** after this interval of time, the registration will be considered expired and the device **210** will be automatically marked as deregistered in the server **100.** An expiration interval of 3600 seconds for the Expires header field allows for a reduction in unnecessary load on WLANs **220,** LANs **430,** devices **210,** and servers **100.**

Also as mentioned above, one problem with communications in Wi-Fi networks **220** is that a SIP wireless device **210** can get out of coverage range (e.g., beyond the range of an AP **410)** before it sends the necessary deregistration message (i.e., a REGISTER request with the Expires header field value set to zero). This problem can defeat or reduce at least some of the advantages of registration described above.

The present application provides a system and method for deregistering out-of-coverage range devices (e.g., **210)** in a wireless local area network (e.g., **220).** According to one embodiment, the SIP Wi-Fi device **210** has means for monitoring (e.g., measuring continuously) radio signal strength. Once the signal strength decreases to a predetermined threshold or level (e.g., signal strength is 10-15% of a relative maximum signal strength), the device **210** composes and sends a "RE-REGISTER" request with a very short expiration interval (e.g., the value of the Expires header field may be set to 30-120 seconds). Note that a RE-REGISTER request is the same as a REGISTER request in SIP. If the device **210** is in the process of completely loosing connection to the network **220,** the server **100** will deregister the device **210** after the above mentioned shortened (i.e., 30-120 seconds) expiration interval in the RE-REGISTER request. Otherwise, if the device **210** is still in range, the device **210** will send a new RE-REGISTER request having an Expires header field value adjusted in accordance with the measured radio signal strength. In particular, if radio signal strength as measured by the device **210** is decreasing, the value of the Expires header field will be decreased. In contrast, if radio signal strength as measured by the device **210** is increasing, the value of the Expires header field will be increased.

Radio signal strength may be affected by one or more of the following: the distance between the wireless device **210** and the access point **410;** the presence of obstacles to Wi-Fi signals such as walls, buildings, etc.; weather conditions such as rain, wind, etc.; and, electromagnetic storms and related phenomena.

According to one embodiment, a plurality of predetermined radio signal strength thresholds or levels may be provided. For example, predetermined thresholds corresponding to the following relative signal strengths may be provided: excellent, very good, good, poor (or weak), and very poor (or very weak). Consider the following example. First, the signal strength is determined to be above the "excellent" threshold. As such, an initial REGISTER request with an expiration interval of 3600 seconds (for example) is sent. The 3600 second expiration interval may be considered as a "default" expiration interval. Second, the signal strength is determined to have decreased to below the "poor" threshold. As such, a RE-REGISTER request with an expiration interval of 120 seconds (for example) is sent. Third, the signal strength is determined to have decreased further to below the "very poor" threshold. As such, a RE-REGISTER request with an expiration interval of 30 seconds (for example) is sent. Fourth, the signal strength is determined to have increased to above the "very poor" threshold but below the "poor threshold". As such, a RE-REGISTER request with an expiration interval of 120 seconds is sent. Fifth, the signal strength is determined to have increased further to above the "excellent" threshold. As such, a RE-REGISTER request with an expiration interval of 3600 seconds is sent. Sixth, the signal strength is determined to have decreased again to below the "very poor" threshold. As such, a RE-REGISTER request with an expiration interval of 30 seconds is sent. In the preceding example, the expiration intervals of 30 and 120 seconds could be 300 and 600 seconds, respectively (for example), or any other predetermined expiration intervals below the default expiration interval of 3600 seconds.

According to one embodiment, the method of the present application may be used for SIP "SUBSCRIBE" requests that include an Expires header field. A SUBSCRIBE request is used to request current state and state updates from a remote node and is described in IETF RFC 3265 "Session Initiation Protocol (SIP) - Specific Event Notification", June 2002, which is incorporated herein by reference.

According to another embodiment, the method of the present application may be used for SIP "RE-INVITE" requests that include a "Session-Expires" header field. A RE-INVITE request allows for a periodic refresh of SIP sessions allowing clients and servers to determine whether the SIP session is still active. The RE-INVITE request is described in IETF RFC 4028 "Session Timers in the Session Initiation Protocol (SIP)", April 2005, which is incorporated herein by reference.

The application provides several advantages. For example, the method of the present application allows wireless devices to be deregistered from SIP registration servers (i.e., SIP registrars) more efficiently.

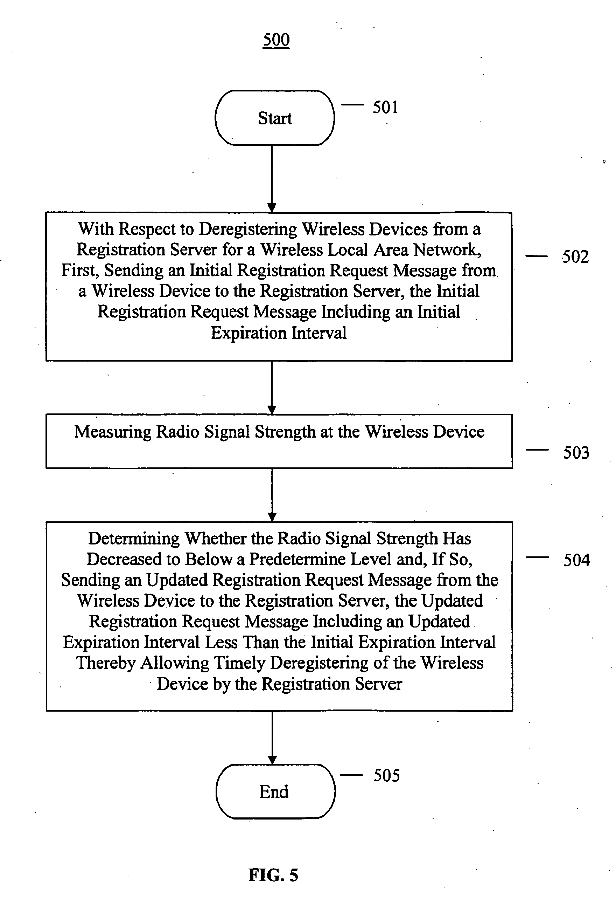

Aspects of the above described method may be summarized with the aid of a flowchart. FIG. 5 is a flow chart illustrating operations **500** of software modules **206** within the memory **201** of a wireless device **210** for deregistering the wireless device **210** from a registration server **100** for a wireless local area network **220,** in accordance with an embodiment of the application.

At step **501,** the operations **500** start.

At step **502,** an initial registration request message is sent from the wireless device **210** to the registration server 100, the initial registration request message including an initial expiration interval (e.g., 3600 seconds).

At step **503,** radio signal strength is measured at the wireless device **210.**

At step **504,** a determination is made as to whether the radio signal strength has decreased to below a predetermined level (e.g., "poor", 10-15% of maximum, etc.) and, if so, an updated registration request message is sent from the wireless device **210** to the registration server **100,** the updated registration request message including an updated expiration interval (e.g., 120 seconds) less than the initial expiration interval thereby allowing timely deregistering of the wireless device **210** by the registration server **100.**

At step **505,** the operations **500** end.

The method may further include determining whether the radio signal strength has increased above the predetermined level and, if so, sending the initial registration request message including the initial expiration interval from the wireless device **210** to the registration server **100** thereby preventing untimely deregistering of the wireless device **210** by the registration server **100.** The initial and updated expiration intervals may be for indicating respective time periods after which the wireless device **210** is to be deregistered from the registration server **100.** The initial expiration interval may be a default expiration interval and the predetermined level may be a predetermined percentage of a relative maximum radio signal strength. The predetermined level may be a plurality of predetermined levels (e.g., excellent, very good, good, poor, very poor) and the initial and updated expiration intervals may relate to one or more of the plurality of predetermined levels. The initial and updated registration request messages may be REGISTER request messages in accordance with the Session Initiation Protocol ("SIP"). Each of the initial and updated registration request messages may include an address for the wireless device **210,** a call identification, and a call sequence number. The initial and updated expiration intervals may be Expires header field values in accordance with the Session Initiation Protocol ("SIP"). The registration server **100** may be one or more of a registrar in accordance with the Session Initiation Protocol ("SIP") and a proxy server. And, the wireless local area network **220** may be a Wi-Fi network and the wireless device **210** may be a Wi-Fi device.

he above described method is generally performed by the wireless device **210.** However, according to an alternate embodiment, the method can be performed by, or in combination with, the data processing system **100.**

While embodiments of this application are primarily discussed as a method, a person of ordinary skill in the art will understand that the apparatus discussed above with reference to a wireless device **210** and a data processing system **100,** may be programmed to enable the practice of the method of these embodiments. Moreover, an article of manufacture for use with a wireless device **210** or data processing system **100,** such as a pre-recorded storage device or other similar computer readable medium including program instructions recorded thereon, may direct the wireless device **210** or data processing system **100** to facilitate the practice of the method of these embodiments. It is understood that such apparatus and articles of manufacture also come within the scope of the application.

The embodiments of the application described above are intended to be exemplary only. Those skilled in this art will understand that various modifications of detail may be made to these embodiments, all of which come within the scope of the application, as set out in the claims.

## Claims

1. A method for deregistering wireless devices (210) from a registration server (100) for a wireless local area network (220), comprising:
sending an initial registration request message from a wireless device (210) to the registration server (100), the initial registration request message having an initial expiration interval;
measuring radio signal strength at the wireless device (210); and,
determining whether the radio signal strength has decreased to below a predetermined level and, if so, sending an updated registration request message from the wireless device (210) to the registration server (100), the updated registration request message having an updated expiration interval less than the initial expiration interval and greater than zero thereby allowing timely deregistering of the wireless device (210) by the registration server (100).

2. The method of claim 1 and further comprising determining whether the radio signal strength.has increased above the predetermined level and, if so, sending the initial registration request message having the initial expiration interval from the wireless device (210) to the registration server (100) thereby preventing untimely deregistering of the wireless device (210) by the registration server (100).

3. The method of claim 1 or claim 2 wherein the initial and updated expiration intervals are for indicating respective time periods after which the wireless device (210) is to be deregistered from the registration server (100).

4. The method of any one of claims 1 to 3 wherein the initial expiration interval is a default expiration interval and wherein the predetermined level is a predetermined percentage of a relative maximum radio signal strength.

5. The method of any one of claims 1 to 3 wherein the predetermined level is a plurality of predetermined levels and wherein the initial and updated expiration intervals relate to one or more of the plurality of predetermined levels.

6. The method of any one of the preceding claims wherein the initial and updated registration request messages are register 'REGISTER' request messages in accordance with the Session Initiation Protocol 'SIP'.

7. The method of any one of the preceding claims wherein each of the initial and updated registration request messages has an address for the wireless device (210), a call identification, and a call sequence number.

8. The method of claim 6 or claim 7 wherein the initial and updated expiration intervals are expires 'Expires' header field values in accordance with the Session Initiation Protocol 'SIP'.

9. The method of any one of the preceding claims wherein the registration server is a registrar in accordance with the Session Initiation Protocol 'SIP' and/or a proxy server.

10. The method of any one of the preceding claims wherein the wireless local area network (220) is a wireless fidelity 'Wi-Fi' network and the wireless device (210) is a Wi-Fi device.

11. A system within a wireless device (210) for deregistering the wireless device (210) from a registration server (100) for a wireless local area network (220), the system comprising:
a processor (138) coupled to memory (124) and to an
interface (111) to the wireless local area network (220); and,
modules (206) within the memory (124) and executed by the processor (1138), the modules (206) being arranged to cause the system to perform the steps of the method of any one of claims 1 to 10.

12. A computer readable medium storing computer readable instructions executable by a processor of a computing device to cause said device to implement the steps of the method of any one of claims 1 to 10.

## Patentansprüche

1. Verfahren zum Entregistrieren von Drahtlosgeräten (210) von einem Registrierungsserver (100) für ein drahtloses LAN (Local Area Network) (220), umfassend:
das Senden einer anfänglichen Registrierungsanforderungsmeldung von einem Drahtlosgerät (210) zu dem Registrierungsserver (100), wobei die anfängliche Registrierungsanforderungsmeldung ein anfängliches Ablaufintervall hat;
das Messen der Funksignalstärke am Drahtlosgerät (210); und
das Ermitteln, ob die Funksignalstärke auf unter einen vorbestimmten Pegel abgefallen ist, und wenn das der Fall ist, das Senden einer aktualisierten Registrierungsanforderungsmeldung von dem Drahtlosgerät (210) an den Registrierungsserver (100), wobei die aktualisierte Registrierungsanforderungsmeldung ein aktualisiertes Ablaufintervall hat, das geringer als das anfängliche Ablaufintervall und größer als null ist, wodurch die Entregistrierung des Drahtlosgeräts (210) durch den Registrierungsserver (100) zum richtigen Zeitpunkt ermöglicht wird.

2. Verfahren gemäß Anspruch 1 und des Weiteren umfassend das Ermitteln, ob die Funksignalstärke über den vorbestimmten Pegel angestiegen ist, und wenn das der Fall ist, das Senden der anfänglichen Registrierungsanforderungsmeldung, die das anfängliche Ablaufintervall hat, von dem Drahtlosgerät (210) an den Registrierungsserver (100), wodurch die Entregistrierung des Drahtlosgeräts (210) durch den Registrierungsserver (100) zum falschen Zeitpunkt verhindert wird.

3. Verfahren gemäß Anspruch 1 oder Anspruch 2, wobei die anfänglichen und aktualisierten Ablaufintervalle der Angabe jeweiliger Zeitspannen dienen, nach denen das Drahtlosgerät (210) von dem Registrierungsserver (100) entregistriert werden soll.

4. Verfahren gemäß einem der Ansprüche 1 bis 3, wobei das anfängliche Ablaufintervall ein Standard-Ablaufintervall ist und wobei der vorbestimmte Pegel ein vorbestimmter Prozentsatz einer relativen maximalen Funksignalstärke ist.

5. Verfahren gemäß einem der Ansprüche 1 bis 3, wobei der vorbestimmte Pegel eine Mehrzahl von vorbestimmten Pegeln ist und wobei die anfänglichen und aktualisierten Ablaufintervalle mit einem oder mehreren aus der Mehrzahl von vorbestimmten Pegeln im Zusammenhang stehen.

6. Verfahren gemäß einem der vorherigen Ansprüche, wobei die anfänglichen und aktualisierten Registrierungsanforderungsmeldungen 'REGISTER'-Registrierungsanforderungsmeldungen entsprechend dem SIP-Protokoll (Session Initiation Protocol) sind.

7. Verfahren gemäß einem der vorherigen Ansprüche, wobei jede der anfänglichen und aktualisierten Registrierungsanforderungsmeldungen eine Adresse für das Drahtlosgerät (210), eine Rufkennung und eine Rufsequenznummer hat.

8. Verfahren gemäß Anspruch 6 oder Anspruch 7, wobei die anfänglichen und aktualisierten Registrierungsanforderungsmeldungen 'Expires'-Ablauf-Header-Feldwerte entsprechend dem SIP-Protokoll (Session Initiation Protocol) sind.

9. Verfahren gemäß einem der vorherigen Ansprüche, wobei der Registrierungsserver ein Registrar entsprechend dem SIP-Protokoll (Session Initiation Protocol) und/oder ein Proxyserver ist.

10. Verfahren gemäß einem der vorherigen Ansprüche, wobei das drahtlose LAN (Local Area Network) (220) ein Wi-Fi-Netz (Wireless Fidelity) und das Drahtlosgerät (210) ein Wi-Fi-Gerät ist.

11. System in einem Drahtlosgerät (210) zum Entregistrieren des Drahtlosgeräts (210) von einem Registrierungsserver (100) für ein drahtloses LAN (Local Area Network) (220), das System umfassend:
einen Prozessor (138), der mit Speicher (124) und einer Schnittstelle (111) zu dem drahtlosen LAN (Local Area Network) (220) gekoppelt ist; und
Module (206) in dem Speicher (124), die durch den Prozessor (138) ausgeführt werden, wobei die Module (206) dazu eingerichtet sind, das System dazu zu bringen, die Schritte des Verfahrens gemäß einem der Ansprüche 1 bis 10 durchzuführen.

12. Computerlesbares Medium, auf dem computerlesbare Anweisungen gespeichert sind, die durch einen Prozessor eines Computergeräts ausgeführt werden können, um das Gerät dazu zu bringen, die Schritte des Verfahrens gemäß einem der Ansprüche 1 bis 10 zu implementieren.

## Revendications

1. Procédé de désenregistrement de dispositifs sans fil (210) d'un serveur d'enregistrement (100) pour un réseau local sans fil (220), comprenant les étapes suivantes :
envoi d'un message de demande d'enregistrement initial d'un dispositif sans fil (210) au serveur d'enregistrement (100), le message de demande d'enregistrement initial présentant un délai d'expiration initial ;
mesure de l'intensité du signal radio au niveau du dispositif sans fil (210) ; et
définition du niveau d'intensité du signal radio par rapport à un niveau prédéfini et, si l'intensité est en dessous de ce niveau prédéfini, envoi d'un message de demande d'enregistrement mis à jour du dispositif sans fil (210) au serveur d'enregistrement (100), le message de demande d'enregistrement mis à jour présentant un délai d'expiration mis à jour, inférieur au délai d'expiration initial et supérieur à zéro, ce qui permet ainsi le prompt désenregistrement du dispositif sans fil (210) par le serveur d'enregistrement (100).

2. Procédé selon la revendication 1, comprenant en outre la définition du niveau d'intensité du signal radio par rapport à un niveau prédéfini et, si l'intensité est au-dessus de ce niveau prédéfini, l'envoi du message de demande d'enregistrement initial présentant le délai d'expiration initial du dispositif sans fil (210) au serveur d'enregistrement (100), ce qui empêche le prompt désenregistrement du dispositif sans fil (210) par le serveur d'enregistrement (100).

3. Procédé selon la revendication 1 ou 2, dans lequel les délais d'expiration initiaux et mis à jour indiquent des durées respectives après lesquelles le dispositif sans fil (210) doit être désenregistré du serveur d'enregistrement (100).

4. Procédé selon l'une quelconque des revendications 1 à 3, dans lequel le délai d'expiration initial est un délai d'expiration par défaut, et dans lequel le niveau prédéfini est un pourcentage prédéfini d'une intensité de signal radio maximale relative.

5. Procédé selon l'une quelconque des revendications 1 à 3, dans lequel le niveau prédéfini est une pluralité de niveaux prédéfinis, et dans lequel les délais d'expiration initiaux et mis à jour correspondent à un ou plusieurs niveaux parmi la pluralité de niveaux prédéfinis.

6. Procédé selon l'une quelconque des revendications précédentes, dans lequel les messages de demande d'enregistrement initiaux et mis à jour sont des messages de demande d'enregistrement « REGISTER », conformément au protocole d'ouverture de session SIP.

7. Procédé selon l'une quelconque des revendications précédentes, dans lequel chacun des messages de demande d'enregistrement initiaux et mis à jour présente une adresse du dispositif sans fil (210), un identifiant d'appel et un numéro de séquence d'appel.

8. Procédé selon la revendication 6 ou 7, dans lequel les délais d'expiration initiaux et mis à jour sont des valeurs de champ d'en-tête d'expiration « Expires », conformément au protocole d'ouverture de session SIP.

9. Procédé selon l'une quelconque des revendications précédentes, dans lequel le serveur d'enregistrement est un registre, conformément au protocole d'ouverture de session SIP, et/ou un serveur mandataire.

10. Procédé selon l'une quelconque des revendications précédentes, dans lequel le réseau local sans fil (220) est un réseau Wifi et le dispositif sans fil (210) est un dispositif Wifi.

11. Système dans un dispositif sans fil (210) permettant de désenregistrer le dispositif sans fil (210) d'un serveur d'enregistrement (100) pour un réseau local sans fil (220), le système comprenant :
un processeur (138) couplé à une mémoire (124) et à une interface (111) au réseau local sans fil (220) ; et
des modules (206) dans la mémoire (124) exécutés par le processeur (138), les modules (206) pouvant amener le système à mettre en oeuvre les étapes du procédé selon l'une quelconque des revendications 1 à 10.

12. Support lisible par ordinateur stockant des instructions lisibles par ordinateur pouvant être exécutées par un processeur d'un dispositif informatique afin d'amener ledit dispositif à mettre en oeuvre les étapes du procédé selon l'une quelconque des revendications 1 à 10.
